# EUROPEAN PATENT APPLICATION

(11) **EP 4 411 650 A1**
(43) Date of publication of application: **07.08.2024**
(21) Application number: 21958967.8
(22) Date of filing: 30.09.2021
(51) Int. Cl.: G06T 15/00, H04N 13/00

(54) **METHODS AND APPARATUSES FOR GENERATING, PERFORMING DATA PROCESSING ON, ENCODING AND DECODING MULTIPLANE IMAGE**

(71) Applicant: GUANGDONG OPPO MOBILE TELECOMMUNICATIONS CORP., LTD., Dongguan, Guangdong 523860 (CN)
(72) Inventor: YANG, You, Dongguan, Guangdong 523860 (CN); JIANG, Xiaoguang, Dongguan, Guangdong 523860 (CN); LIU, Qiong, Dongguan, Guangdong 523860 (CN)
(74) Representative: Taor, Simon Edward William
(86) International application number: PCT/CN2021/122390
(87) International publication number: WO 2023/050396

(57) **Abstract**

The present disclosure provides methods and apparatuses for generating, performing data processing on, encoding and decoding a multiplane image. In the methods, a partitioned multiplane image (PMPI) is used to represent a three-dimensional scene; the PMPI includes a plurality of sub-multiplane images (sMPIs) to respectively represent a plurality of scene areas that are obtained by dividing the three-dimensional scene; initial depths of the plurality of sMPIs are determined according to depth information of the three-dimensional scene areas represented by the sMPIs; and each sMPI includes a plurality of layers that are obtained by performing sampling at different depths in the scene area represented by the sMPI. According to the methods and apparatuses of the present disclosure, the sampling efficiency and the video resolution can be improved.

## Description

### TECHNICAL FIELD

Embodiments of the disclosure relate to, but are not limited to, image processing techniques, and in particularly to a method and apparatus for generating, performing data processing on, encoding and decoding a multiplane image (MPI).

### BACKGROUND

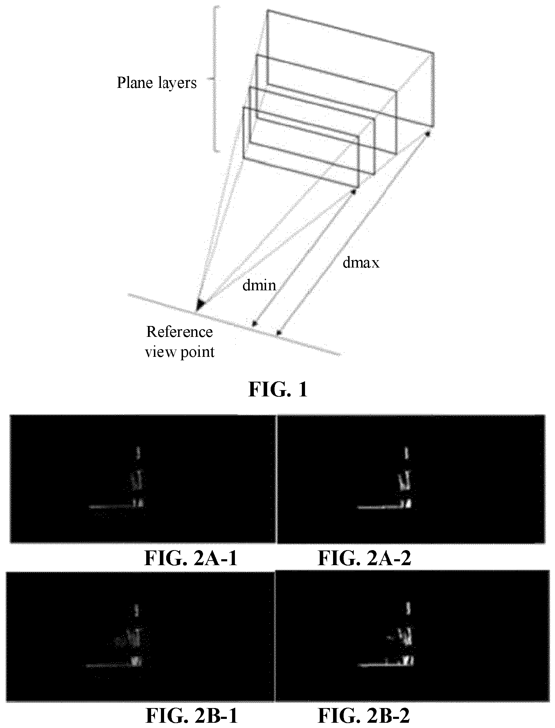

Multiplane image (MPI) is a non-redundant representation of a scene. In a spatial coordinate system with a given reference view point as an origin, the MPI decomposes the scene into a series of layers, which are plane layers or spherical layers. Take an MPI composed of the plane layers as an example, as shown in FIG. 1, multiple plane layers are positively parallel with respect to the reference view point and are located at different depths. A depth range [dmin, dmax] of the MPI needs to be set in advance according to depth-of-field data of the scene, where dmin is a minimum depth, that is, a distance from a layer closest to the reference view point to the reference view point, and dmax is a maximum depth, that is, a distance from a layer farthest to the reference view point. Each layer in the MPI is partitioned into two parts: a color frame and a transparency frame. The color frame and the transparency frame of a layer contain texture information and transparency information of the scene at the plane layer respectively. The MPI may be used for immersive videos, but the effect needs to be improved.

### SUMMARY

A summary of the subject of the disclosure is described in detail. The summary is not intended to limit the scope of protection of the claims.

An embodiment of the disclosure provides a method for generating a multiplane image (MPI), including the following operations.

A 3-dimension (3D) scene is partitioned into multiple scene regions.

A patch multiplane image (PMPI) is generated, where the PMPI includes multiple sub multiplane images (sMPIs), each sMPI representing a respective one of the multiple scene regions, and a starting depth of the sMPI is determined based on at least depth information of the scene region represented by the sMPI.

An embodiment of the disclosure further provides a data processing method for a multiplane image (MPI), including the following operations.

Raw storage data of a patch multiplane image (PMPI) is obtained, where the PMPI includes multiple sub multiplane images (sMPIs) for representing multiple scene regions partitioned by a 3-dimension (3D) scene.

The raw storage data of the PMPI is converted into packed compressed storage (PCS) data, where the PCS data is configured to determine a depth of an active layer of pixels and color and transparency of the pixels at the active layer in the PMP.

An embodiment of the disclosure further provides a method for encoding a multiplane image (MPI), including the following operations.

Packed compressed storage (PCS) data of a patch multiplane image (PMPI) is received, where the PMPI includes multiple sub multiplane images (sMPIs), each sMPI representing a respective one of multiple scene regions partitioned by a 3-dimension (3D) scene, and the PCS data includes at least one view parameter, and data of a texture attribute component and a transparency attribute component.

The PMPI is encoded based on the PCS data, to obtain at least one encoded view parameter and atlas data.

An embodiment of the disclosure further provides a method for decoding a multiplane image (MPI), including the following operation.

An encoded bitstream of a patch multiplane image (PMPI) is decoded, to obtain at least one view parameter, and data of a texture attribute component and a transparency attribute component of the PMPI;

Where the PMPI includes multiple sub multiplane images (sMPIs), each sMPI representing a respective one of multiple scene regions partitioned by a 3-dimension (3D) scene, and the encoded bitstream includes the view parameter and atlas data of the PMPI.

An embodiment of the disclosure further provides a bitstream, where the bitstream is generated by encoding a patch multiplane image (PMPI), the bitstream includes at least one view parameter and atlas data of the PMPI, and the PMPI includes multiple sub multiplane images (sMPIs) for representing multiple scene regions partitioned by a 3-dimension (3D) scene.

An embodiment of the disclosure further provides an apparatus for generating a multiplane image (MPI), including a processor and a memory storing a computer program, and the processor, when executing the computer program, implements the method for generating the MPI in any embodiment of the disclosure.

An embodiment of the disclosure further provides a data processing apparatus for a multiplane image (MPI), including a processor and a memory storing a computer program, and the processor, when executing the computer program, implements the dat processing method for the MPI in any embodiment of the disclosure.

An embodiment of the disclosure further provides an apparatus for encoding a multiplane image (MPI), including a processor and a memory storing a computer program, and the processor, when executing the computer program, implements the method for encoding the MPI in any embodiment of the disclosure.

An embodiment of the disclosure further provides an apparatus for decoding a multiplane image (MPI), including a processor and a memory storing a computer program, and the processor, when executing the computer program, implements the method for decoding the MPI in any embodiment of the disclosure.

An embodiment of the disclosure further provides a non-transitory computer-readable storage medium, having stored thereon a computer program, and the computer program, when executed by a processor, implements the method for generating, performing processing data on, encoding and decoding the MPI in any embodiment of the disclosure.

After reading and understanding the drawings and detailed description, other aspects may be understood.

### BRIEF DESCRIPTION OF THE DRAWINGS

The drawings are used to provide an understanding of the embodiments of the disclosure, constitute a part of the description, and together with the embodiments of the disclosure, serve to explain the technical solution of the disclosure, and are not limiting to the technical solution of the disclosure.
FIG. 1 is a structural diagram of an exemplary MPI composed of four plane layers;
FIG. 2A to FIG. 2F are schematic diagrams of six consecutive plane layers in an exemplary MPI, showing a color frame and a transparency frame of each plane layer;
FIG. 3 is a schematic diagram of a 3D scene represented by using an ordinary MPI;
FIG. 4 is a schematic diagram of a 3D scene represented by using a PMPI in the embodiments of the disclosure;
FIG. 5 is a flowchart of a method for generating an MPI according to an embodiment of the disclosure;
FIG. 6 is a schematic diagram of determination of a starting depth of an sMPI by pooling in an embodiment of the disclosure;
FIG. 7 is a schematic diagram of an exemplary PMPI generated in an embodiment of the disclosure;
FIG. 8 is a schematic diagram of a compression processing process for videos;
FIG. 9 is a schematic diagram of one type of PCS data converted from raw storage data of an MPI;
FIG. 10 is a flowchart of a data processing method for an MPI according to an embodiment of the disclosure;
FIG. 11 is a schematic diagram of one type of PCS data converted from raw storage data of a PMPI according to an embodiment of the disclosure;
FIG. 12 is a schematic diagram of another type of PCS data converted from raw storage data of a PMPI according to an embodiment of the disclosure;
FIG. 13 is a schematic diagram of yet another type of PCS data converted from raw storage data of a PMPI according to an embodiment of the disclosure;
FIG. 14 is a structural diagram of an apparatus for encoding a PMPI according to an embodiment of the disclosure;
FIG. 15 is a flowchart of a method for encoding a PMPI according to an embodiment of the disclosure;
FIG. 16 is a flowchart of a method for decoding a PMPI according to an embodiment of the disclosure; and
FIG. 17 is a schematic diagram of an apparatus for generating a PMPI according to an embodiment of the disclosure.

### DETAILED DESCRIPTION

Multiple embodiments are described in the disclosure, but the description is exemplary and not limiting, and it is apparent to those of ordinary skill in the art that more embodiments and implementations may be included within the scope of the embodiments described in the disclosure.

In the description of the disclosure, terms such as "exemplary" or "for example" are used as examples, explanations, or illustrations. Any embodiment described as "exemplary" or "for example" in the disclosure should not be construed as being more preferred or advantageous than other embodiments. In the disclosure, a term "and/or" is an association relationship describing associated objects, and indicates that there may be three relationships. For example, A and/or B may indicate three cases: existence of A alone, existence of A and B simultaneously, and existence of B alone. A term "Multiple" refers to two or more. Furthermore, in order to clearly describe the technical solution in the embodiments of the disclosure, terms such as "first", "second" are used to distinguish same or similar items with substantially same functions and effects. It may be understood by those skilled in the art that the terms such as "first", "second" are not limited in number or execution order, and that the terms such as "first", "second" are not limited to any difference.

When describing representative exemplary embodiments, the description may have presented the methods and/or processes as a particular sequence of operations. However, to the extent that the methods or processes do not depend on the particular sequence of the operations described herein, the methods or processes should not be limited to the particular sequence of the operations. It may be understood by those of ordinary skill in the art, other sequences of the operations are also possible. Therefore, the particular sequence of the operations described in the description should not be interpreted as a limitation on the claims. Furthermore, the claims for the methods and/or processes should not be limited to performing the operations in the written order, and it may be readily understood by those skilled in the art that these sequences may vary and remain within the spirit and scope of the embodiments of the disclosure.

A multiplane image (MPI) is a non-redundant layered representation of a 3D scene. The 3D scene is decomposed into a set of plane or spherical layers, which are sampled at different depths from a given reference point. Each layer is obtained by projecting a portion of the 3D scene around the layer onto a same reference camera. The reference camera is located at a given reference view point. When using plane layers, the reference camera is a perspective camera; and when using spherical layers, the reference camera is a spherical (usually being rectangular) camera.

Please refer to FIG. 1, in a spatial coordinate system with a given reference view point (e.g. a reference camera) as an origin, an MPI decomposes a scene into a series of plane layers or spherical layers. Take the MPI composed of the plane layers as an example, the plane layers are positively parallel with respect to the reference view point and are located at different depths. A depth range [dmin, dmax] of the plane layers needs to be set in advance according to a depth range of the actual scene. Assuming that the MPI includes S plane layers, a size of each plane layer is W×H, then a size of the MPI may be expressed as W×H×S. Here W is a number of pixels in a width direction of the MPI, H is a number of pixels in a height direction of the MPI, the MPI includes W×H pixels, and a resolution of the plane image is W×H. The exemplary MPI shown in FIG. 1 includes 4 layers, but a number of plane layers or spherical layers included in the MPI, i.e. a number of layers, may also be 2, 3, 5 or more, such as 100, 200, etc. Each layer of the MPI includes a color frame and a transparency frame for recording the color and transparency of pixels on the each layer, and a pixel may have different color and transparency on different layers.

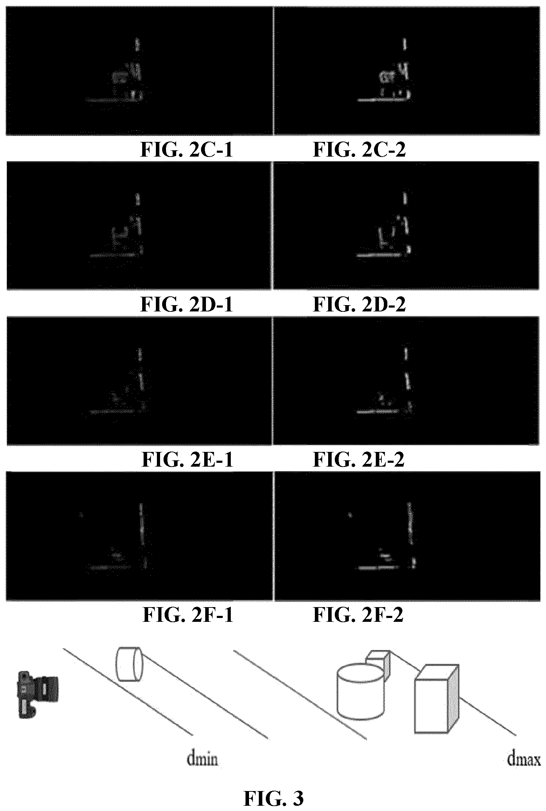

In realistic scenes, most spatial regions usually do not have visible surface, that is, active regions. In the MPI, most regions of color frames and transparency frames in multiple layers of the MPI are invalid values, that is, they do not contain visible information. As shown in FIG. 2A to FIG. 2F, there are 6 consecutive plane layers from a 40^{th} plane layer to a 45^{th} plane layer of an MPI, where FIG. 2A-1 shows a color frame of the 40^{th} plane layer, FIG. 2A-2 shows a transparency frame of the 40^{th} plane layer, FIG. 2B-1 shows a color frame of the 41^{st} plane layer, FIG. 2B-2 shows a transparency frame of the 41^{st} plane layer, and so on for other features. Here the black part in each transparency frame is an invalid region.

The MPI is a layered representation of a 3D scene, that is, a sampling result of the 3D scene, points on the MPI plane layer are sampling points. As may be seen from examples in FIG. 2A to FIG. 2F, most of the sampling points in the MPI are located at invalid positions of the 3D scene, where there is no visible surface and the transparency is 0, and only a small portion of the sampling points are located at active regions of the 3D scene, where there are visible surfaces and the transparency is not 0. The MPI may be used for immersive videos, and from a perspective of immersive experience, the active regions in the 3D scene play a decisive role. However, most of the sampling points of the MPI are wasted, resulting in low sampling efficiency and low resolution of an eventually presented immersive video.

The depth range [dmin, dmax] of the MPI is set according to a global depth of the scene, and the depth range needs to include most of valid information of the scene. A depth of a layer closest to a reference view point is referred to as a starting depth dmin of the MPI, and a depth of a layer farthest from the reference view point may be referred to as an ending depth dmax of the MPI. Take a simple scene shown in FIG. 3 as an example, parallel lines indicate depth position of each layer in the MPI within the 3D scene. Due to one geometry in the scene being far away from other geometries, a large depth range has to be used for the MPI in order to represent main information of the scene (four geometries), and the obtained plane layers (e.g. four in FIG. 3) are sparse. For three geometries located in the distant region, valid information only appear on two deeper plane layers in the MPI. Therefore, a sampling efficiency for the MPI is low.

In order to solve the problem of low sampling efficiency for the MPI, the embodiments of the disclosure propose an MPI with adaptive depth change characteristics. In order to distinguish from the MPI shown in FIG. 1 and FIG. 3, the MPI shown in FIG. 1 and FIG. 3 is referred to as ordinary MPI, that is, an MPI representing a whole 3D scene, and an MPI proposed in the embodiments of the disclosure is referred to as a patch multiplane image (PMPI). The PMPI in the embodiments of the disclosure is an MPI including multiple sub multiplane images (sMPIs), where each sMPI represents a respective one of multiple scene regions partitioned by a 3D scene, the sMPI includes multiple layers sampled at different depths of the scene region represented by the sMPI, and a starting depth of the sMPI is determined based on at least depth information of the scene region represented by the sMPI. The PMPI may be regarded as an extension of the ordinary MPI. A basic unit of the ordinary MPI is multiple layers with a same size, which are used for representing a complete 3D scene. The PMPI adopts multiple sMPIs for representing multiple scene regions partitioned by a 3D scene, each scene region may be regarded as a patch of the 3D scene, and each sMPI may also be regarded as a patch of the PMPI. Therefore, the PMPI is a layered and patch-partitioned representation of the 3D scene.

A single sMPI is also a kind of the MPI, and represents a scene region partitioned from the 3D scene, and the scene region may also be regarded as a 3D scene, with only different size and shape from the original 3D scene. The way for representing the scene region by the sMPI may still be the same as the way for representing the 3D scene by the ordinary MPI, for example, an sMPI includes multiple layers sampled at different depths of the scene region, the multiple layers have the same size and shape, each layer includes a color frame and a transparency frame, and the multiple layers may be distributed according to a set rule (e.g., equal spacing or equal visual distance). Similar to the MPI, the depth range of the sMPI is set according to the principle of including most of the valid information in the scene region.

Ending depths of multiple sMPIs in the PMPI may be set to be same, while the starting depth may be set to be different according to depth information of the scene region, so as to introduce depth information of the scenes, increase the adaptive ability for the scene depths, and make more sampling points be located at active positions of the scenes.

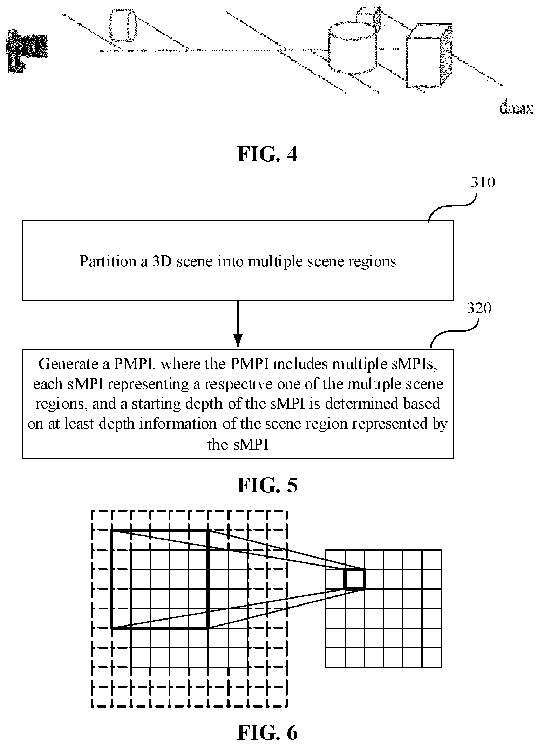

A 3D scene and a reference view point shown in FIG. 4 are the same as those in FIG. 3. When the PMPI in the embodiments of the disclosure is adopted to represent the 3D scene, it is assumed that a number of scene regions is set to 2, and the 3D scene is partitioned into two scene regions by using a vertical plane, where one of the scene regions includes two geometries located on a left side of the reference view point, and is hereinafter referred to as a first scene region, and a geometry in the first scene region is closest to the reference view point and another geometry is farther away from the reference view point. Another scene region includes two geometries located on a right side of the reference view point, and is hereinafter referred to as a second scene region. Both geometries in the second scene region are far away from the reference view point.

In the PMPI, each of the first scene region and the second scene region is represented by a respective one of sMPIs, each sMPI includes four plane layers. Since a depth difference between the two geometries in the first scene region is large, the scene depth range of the sMPI for representing the first scene region needs to be set to be large. A depth difference between the two geometries in the second scene region is small and close to the rear, and the depth range of the sMPI for representing the second scene region may be set to be small. When the ending depths of different sMPIs are set to be the same, the starting depth of the sMPI for representing the first scene region is small, while the starting depth of the sMPI for representing the second scene region is large. The obtained PMPI representation of the 3D scene is shown in FIG. 4. As may be seen from FIG. 4, the four layers of the sMPI for representing the second scene region become dense and are all located near the geometries. Therefore, compared with the MPI in FIG. 3, the PMPI has more sampling points located at active positions. That is to say, a layered and patch-partitioned PMPI for representing the scene has higher sampling efficiency relative to a layered representation of the ordinary MPI. It should be noted that the example shown in FIG. 4 is only exemplary in partitioning the 3D scene, and is intended to illustrate a difference between the PMPI and the ordinary MPI with a simple example.

An embodiment of the disclosure provides a method for generating a multiplane image (MPI), as shown in FIG. 5, including the following operations 310 to 302.

At 310, a 3-dimension (3D) scene is partitioned into multiple scene regions.

At 320, a patch multiplane image (PMPI) is generated, where the PMPI includes multiple sub multiplane images (sMPIs), each sMPI representing a respective one of multiple scene regions, and a starting depth of the sMPI being determined based on at least depth information of the scene region represented by the sMPI.

In an exemplary embodiment of the disclosure, determination of the starting depth of the sMPI based on at least the depth information of the scene region represented by the sMPI, includes: the starting depth of the sMPI is determined according to a minimum depth of a first region, where the first region is the scene region represented by the sMPI, or the first region is a region composed of the scene region represented by the sMPI and one or more neighbouring regions of the scene region represented by the sMPI. Here, the one or more neighbouring regions of the scene region represented by the sMPI may include one or more scene regions around the scene region represented by the sMPI in the 3D scene, or the one or more neighbouring regions may include a region composed of multiple rows of pixels and/or multiple columns of pixels around the scene region represented by the sMPI in the 3D scene, and is not required to be a complete scene region.

In an example of the embodiment, when the starting depth of the sMPI is determined according to the minimum depth of the first region, the starting depth of the sMPI is set to be the minimum depth of the first region. In another example of the embodiment, when the starting depth of the sMPI is determined according to the minimum depth of the first region, a depth slightly smaller than the minimum depth may also be taken as the starting depth of the sMPI based on the minimum depth of the first region, for example, subtracting a set value from the value of the minimum depth, or multiplying a set ratio by the value obtained by subtracting the set value from the value of the minimum depth to make the determined starting depth of the sMPI having a certain margin. The value of the minimum depth may be a minimum depth value of the scene region represented by the sMPI in a depth map of the 3D scene, and transformations such as rounding and normalization may be performed on the minimum depth value in the depth map for encoding purposes. Depth values in the 3D scene may be expressed as gray values.

In an example of the embodiment, the first region is the scene region represented by the sMPI, and the starting depth of the sMPI is determined according to the minimum depth of the scene region represented by the sMPI. Considering that the depth value may have a deviation in the depth map of the 3D scene, in another example of the embodiment, the starting depth of the sMPI is determined according to the minimum depth of the region composed of the scene region represented by the sMPI and the one or more neighbouring regions of the scene region represented by the sMPI, where the determined starting depth is always less than or equal to the starting depth determined only according to the minimum depth of the scene region represented by the sMPI. Therefore, the impact of the above deviation can be avoided as much as possible, and sMPI can completely sample the active regions in the represented scene region.

In another example, pooling may be adopted to calculate the starting depth of each sMPI in actual operation. As shown in FIG. 6, it is assumed that a 3D scene is partitioned into 36 scene regions by using a 6×6 grid, and the solid line region on a left side of FIG. 6 represents an original depth map of the 3D scene, which is also partitioned into 36 scene regions, each grid in the map representing a scene region. The minimum depth of each scene region may be determined according to the depth information of the scene region in the depth map. In the example, a pooling size is 5×5 and a pooling step is 1. In order to make the number of grids in the pooled depth map still be 6×6, the original depth map is expanded as the center. As shown in FIG. 6, the expanded depth map includes 10×10 grids, the expanded grids are represented by dashed lines, and a minimum depth of each expanded grid is copied from a minimum depth of the grids in the original depth map closest to the each expanded grid (a length of a connecting line between centers of the two grids may be taken as a distance between the two grids). A minimum pooling operation is performed on the minimum depth of the grid to obtain a pooled depth map on the right side of FIG. 6, in which the minimum depth of each grid is equal to a minimum depth of 5×5 grids centered on the each grid in the original depth map, and the minimum depth is set as the starting depth of the sMPI representing the grid (i.e., the scene region). Therefore, the operation for determining the starting depth of the sMPI according to the minimum depth of the region composed of the scene region represented by the sMPI and the one or more neighbouring regions of the scene region represented by the sMPI is realized.

In an exemplary embodiment of the disclosure, the sMPI includes multiple layers sampled at different depths in the scene region represented by the sMPI, and each of the multiple layers includes a color frame and a transparency frame.

In the embodiment, the PMPI is generated through the following operations 1 to 2.

At operation 1, the starting depths and ending depths of the multiple partitioned sMPIs are determined, where for each of the multiple sMPIs, the starting depth of the sMPI is determined based on at least the depth information of the scene region represented by the sMPI, and ending depths of the multiple sMPIs are set to be same.

The PMPI may be regarded as an ordinary MPI, and an ending depth is set for the multiple sMPIs in the PMPI according to a setting manner of an ending depth of the ordinary MPI.

At operation 2, for each of the multiple sMPIs, a depth of each layer included in the sMPI is determined according to the starting depth and the ending depth of the sMPI, a number of layers of the sMPI, and a distribution rule of the layers, and sampling is performed at the depth of the each layer of the scene region represented by the sMPI, to obtain a color frame and a transparency frame of the each layer included in the sMPI.

In the embodiment, the multiple sMPIs correspond to the multiple scene regions one to one, and the multiple sMPIs are set to be same in terms of the number of layers and the distribution rule of the layers, so as to simplify processing and improve encoding efficiency. The distribution rule of the layers may be, for example, equal spacing distribution or equal visual distance distribution. However, the disclosure is not limited thereto. In other embodiments, the number of layers of the multiple sMPIs and the distribution rule of layers in the PMPI may also be different, which may increase some encoding complexity, but may more flexibly represent the 3D scene.

In the embodiment, the multiple layers may be plane layers or spherical layers.

In an exemplary embodiment of the disclosure, the operation of partitioning the 3D scene into the multiple scene regions includes: the 3D scene is partitioned into the multiple scene regions according to a preset scene partition rule, where at least one of the following information of the partitioned multiple scene regions is determined according to the preset scene partition rule: a number of the multiple scene regions, shapes of the multiple scene regions, sizes of the multiple scene regions, or positions of the multiple scene regions; where the sizes of the multiple scene regions are same or different, the shapes of the multiple scene regions are at least one of regular shape or irregular shape, and the regular shape includes at least one of: triangle, rectangle, pentagon, or hexagon.

In an example of the embodiment, the operation of partitioning the 3D scene into the multiple scene regions according to the preset scene partition rule includes: the 3D scene is partitioned into M×N scene regions by using an M×N grid, where M and N are positive integers, and M×N ≥ 2. In the example, the partitioned M×N scene regions are rectangular regions with the same size. In this partition manner, it may easily determine (for example, by a looking up table or simple calculation through a formula) the scene region where each pixel is located in the PMPI according to the coordinates of the pixel, and does not require to assign an additional identification to the scene region where the pixel is located or the sMPI to which the pixel belongs. However, the disclosure is not limited to this partition manner.

In an exemplary embodiment of the disclosure, the generated raw storage data of the PMPI includes a frame parameter and frame data of a PMPI frame;
here the frame parameter of the PMPI frame in the raw storage data includes at least one of:
a resolution of the PMPI frame;
a number of the multiple sMPIs in the PMPI frame;
a number of layers uniformly set for the multiple sMPIs in the PMPI frame;
a distribution rule of layers uniformly set for the multiple sMPIs in the PMPI frame;
an ending depth uniformly set for the multiple sMPIs in the PMPI frame; or
values of M and N when partitioning the 3D scene by using a M×N grid;
here, frame data of each PMPI frame in the raw storage data includes data of a color frame and a transparency frame of each layer in each of the multiple sMPIs included in the PMPI frame.

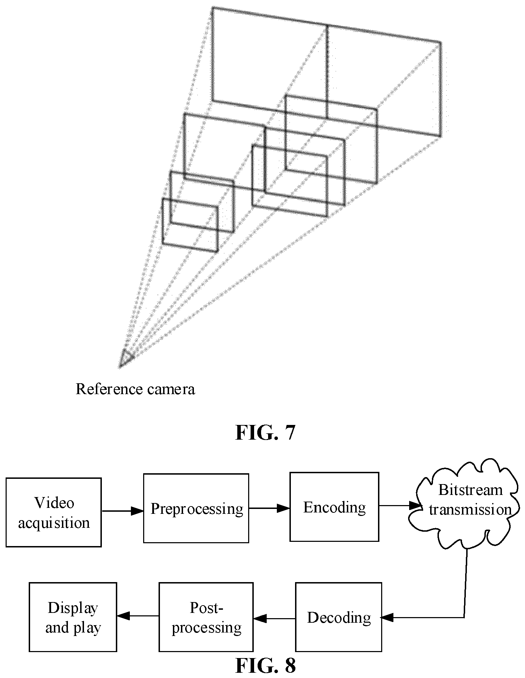

Compared with the ordinary MPI, the starting depth of the PMPI generated by the embodiment of the disclosure is more flexible, and may be adaptively changed when the depth in different regions of the scene changes. As a result, the sampling points of the PMPI are concentrated on the visible surface of the scene, and the sampling efficiency is improved. When the number of layers of the sMPI in the PMPI is the same as that of the ordinary MPI, the plane layer distribution of the PMPI is generally denser, which is equivalent to providing the ordinary MPI with more layers, but the number of sampling points does not increase. As shown in FIG. 7, the denser depth layers allow for more details and better quality of the final immersive video generated according to the PMPI.

After video compression, the MPI may be displayed as an immersive video. FIG. 8 shows a corresponding video processing process. At an encoding end, a 3D scene image (e.g., an image captured by a 3D camera) collected by a video collection apparatus are preprocessed to obtain an MPI, which is compressed and encoded, and then transmitted as a bitstream. At a decoding end, the bitstream is decoded and post-processed, and then displayed and played in the form of the immersive video.

In the standard MPEG-I for immersive videos in Moving Picture Experts Group (MPEG), image data (such as the packed compressed storage (PCS) data obtained by compressing raw storage data such as a color frame and a transparency frame of the MPI, and the reference view point camera parameters) may be used as an input of a Test model of immersive video (TMIV) in MPEG. Before input into the TMIV, the MPI needs to be preprocessed and converted into the PCS data.

Taking an MPI frame with an image resolution W×H and a layer number S, that is, the MPI frame with size W×H×S, as an example, it can be converted into the PCS data form. The operation of recording the related parameters of each pixel in the MPI includes:
N_{i,j}: a number of active layers of the pixel (i, j);
C_{i,j,k}: color data such as color value at a k-th active layer of the pixel (i, j);
D_{i,j,k}: an index (D_{i,j,k} ∈ [1, S]) of the k-th active layer of the pixel (i, j); and
T_{i,j,k}: a transparency value at the k-th active layer of the pixel (i, j).

For the ordinary MPI, the pixel (i, j) are included in S layers of the MPI, and the layer(s) at which transparency value of the pixel (i, j) is/are not 0 is/are active layer(s) of the pixel (i, j).

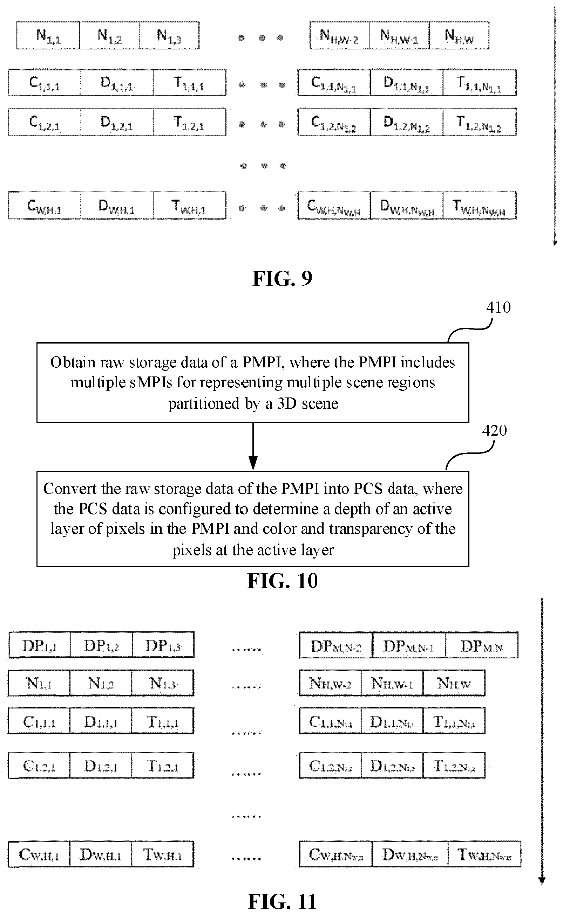

FIG. 9 shows an example of PCS data of an MPI packed according to the above parameters.

It may be seen that the raw storage data of the MPI with size W×H×S will not be completely retained in the PCS data. In practical situations, the value of a pixel at some plane layers is invalid (that is, the pixel is completely transparent and has no valid information). Therefore, for the pixel (i, j), it is only necessary to keep the information of the pixel (i, j) at N_{i,j} active plane layers of the S plane layers. It is to be noted that the number of active plane layers for each pixel is uncertain. It is apparent that the compressed PCS data reduces the storage space occupied by the MPI. Furthermore, the storage mode of the PCS data reduces a number of memory accesses in the subsequent decoding process. Given the size W×H of each plane of the MPI, only two memory access operations are needed to read the whole MPI frame into a memory.

For the ordinary MPI, the multiple MPI frames within a set time have the same starting depth and the same ending depth, and the distribution rule of multiple layers in the MPI are known. The depth of each layer in the MPI may be calculated according to the starting depth and ending depth. The starting depth and the ending depth of the MPI frame may be recorded in the frame parameters of the MPI frame and need not be written into the PCS data of a single MPI frame. Therefore, the depth information of the active layer of the pixel does not need to be additionally recorded in the PCS data of a single MPI.

Like the ordinary MPI, the PMPI may also be compressed and encoded as video frame. The PMPI may be generated directly according to the image of the 3D scene, and may also be generated based on the ordinary MPI. Before encoding the PMPI, the raw storage data of the PMPI needs to be converted into the PCS data.

As may be seen above, the PMPI includes multiple sMPIs. In multiple layers included in each sMPI, a depth of a layer closest to the reference view point is the starting depth of the sMPI, a depth of a layer farthest from the reference view point is the ending depth of the sMPI, and depths of other layers are between the starting depth and the ending depth of the sMPI. The multiple layers may also be distributed according to a set rule, such as equal spacing or equal visual distance. Therefore, the depth of each layer of the sMPI may be calculated after obtaining the starting depth and ending depth of the sMPI. The ending depth of the sMPI in different PMPI is set to be same. However, the starting depth of the sMPI in different PMPI is related to the depth information of the scene region represented by the sMPI, is not preset and is not fixed. Therefore, in the embodiment of the disclosure, when the raw storage data of the PMPI is converted into the PCS data, it is necessary to provide the starting depth information, so that the decoding end can calculate the depth(es) of the active layer(s) of the pixel(s) accurately.

Therefore, an embodiment of the disclosure provides a data processing method for a multiplane image (MPI). As shown in FIG. 10, the method includes the following operations 410 to 420.

At 410, raw storage data of a patch multiplane image (PMPI) is obtained, where the PMPI includes multiple sub multiplane images (sMPIs) for representing multiple scene regions partitioned by a 3-dimension (3D) scene.

At 420, the raw storage data of the PMPI is converted into packed compressed storage (PCS) data, where the PCS data is configured to determine, for each pixel in the PMPI, a depth(s) of an active layer(s) of the pixel and color and transparency of the pixel at the active layer(s) in the PMPI.

In an exemplary embodiment of the disclosure, the PMPI is generated by using a generation method as described in any embodiment of the disclosure, each pixel in the PMPI is included in an sMPI, and each of multiple layers included in the sMPI records a color value and a transparency value of the pixel. A pixel in the ordinary PMI are included in all layers of the ordinary PMI, while PMPI is partitioned into patches, so a pixel in the PMPI is included in all layers of an sMPI. In the disclosure, the sMPI including the pixel is referred to as the sMPI where the pixel is located. The color value and transparency value of the pixel are recorded in all layers of the sMPI where the pixel is located, but only some of these layers may be active layers of the pixel. In video standards (e.g. immersive video related standards for MPEG) related to the MPI, the active layer(s) of the pixel in the MPI may be a layer(s) where the transparency of the pixel is greater than a set threshold (e.g. 0) in the MPI. The active layer(s) of the pixel in the PMPI in the embodiment of the disclosure may comply with the requirements in the above-mentioned standards, for example, the active layer(s) of the pixel in the PMPI refers to a layer(s) in the sPMI including the pixel, at which transparency is greater than the set threshold value (e.g. 0), in the PMPI. The active layer(s) of a pixel may include one or more layers, depending on the actual scene.

In an exemplary embodiment of the disclosure, the PCS data includes frame data and a frame parameter of a PMPI frame.

In an example of the embodiment, the frame data of the PMPI frame in the PCS data includes:
a starting depth of each of the multiple sMPIs in the PMPI frame; and
the following data of each pixel in the PMPI frame: color data and transparency data of the pixel at each active layer, and a layer index of the each active layer in an sMPI where the pixel is located.

In another example of the embodiment, frame data of a PMPI frame in the PCS data includes:
the starting depth of each of the multiple sMPIs in the PMPI frame; and
the following data of each pixel in the PMPI frame: an index of the sMPI where the pixel is located, the color data and the transparency data of the pixel at the each active layer, and the layer index of the each active layer in the sMPI where the pixel is located.

In yet another example of the embodiment, frame data of a PMPI frame in the PCS data includes: the following data of each pixel in the PMPI frame: a starting depth of the sMPI where the pixel is located, the color data and the transparency data of the pixel at the each active layer, and the layer index of the each active layer in the sMPI where the pixel is located.

In the above three examples, frame data of a PMPI frame in the PCS data may be added with a parameter, that is, a number of active layers of each pixel in the PMPI frame. Adding this parameter is beneficial for improving the efficiency of data encoding and parsing.

In an example of the embodiment, the PCS data further includes a frame parameter of the PMPI frame, and the frame parameter of the PMPI frame in the PCS data includes at least one of:
a resolution of the PMPI frame;
a number of the multiple sMPIs in the PMPI frame;
a number of layers uniformly set for the multiple sMPIs in the PMPI frame;
a distribution rule of layers uniformly set for the multiple sMPIs in the PMPI frame;
an ending depth uniformly set for the multiple sMPIs in the PMPI frame; or
values of M and N when partitioning the 3D scene by using a M×N grid.

The frame parameter of the PMPI frame in the example may be applied to the embodiments shown in FIGs. 11, 12, and 13 and will not be repeated below.

In an exemplary embodiment of the disclosure, there is provided a first PCS data format suitable for the PMPI in the disclosure. Frame data of a PMPI in the PCS data includes:
a starting depth of each sMPI in the PMPI; and
the following parameters of each pixel in the PMPI:
   a number of active layers of the pixel; and
   color data and transparency data of the pixel at the each active layer, and a layer index of the active layer in the sMPI where the pixel is located.

In the embodiment, it is assumed that the image resolution of the PMPI is W×H, M×N grid partition is adopted, the number of sMPIs included in the PMPI is M×N, and the number of layers of each sMPI is S. Then the PCS data format of the PMPI is shown in FIG. 11, and frame data of a PMPI frame in the PMPI includes:
DP_{x,y}: a starting depth of an sMPI for representing the scene region represented by a grid (x, y), x ∈ [1, M], y ∈ [1, N];
N_{i,j}: a number of active layers of the pixel (i, j), i ∈ [1, H], j ∈ [1, W];
C_{i,j,k}: color data, e.g., color value, at a k-th active layer of the pixel (i, j);
D_{i,j,k}: an index (D_{i,j,k} ∈ [1, S]) of the k-th active layer of the pixel (i, j); and
T_{i,j,k}: transparency data, e.g., transparency value, at the k-th active layer of the pixel (i, j).

In the embodiment, the starting depth of each sMPI in the PMPI frame is written into the frame data of the PMPI frame, and the sMPI where the pixel (i, j) is located may be determined according to i, j and the partition rule. By taking into account of the ending depth, the number of layers and the distribution rule of layers of the sMPI in the frame parameter, the depth of each layer of the sMPI where the pixel (i, j) is located may be calculated, and then the depth of each active layer of the pixel (i, j) may be determined according to the indexes of all active layers of the pixel (i, j), so as to be used for subsequent encoding processing.

In an exemplary embodiment of the disclosure, there is provided a second PCS data format suitable for the PMPI in the disclosure. Frame data of a PMPI in the PCS data includes:
a starting depth of each sMPI in the PMPI; and
the following parameters for each pixel in the PMPI:
   a number of active layers of the pixel;
   an index of the sMPI where the pixel is located; and
   color data and transparency data of the pixel at the each active layer, and a layer index of the active layer in the sMPI where the pixel is located.

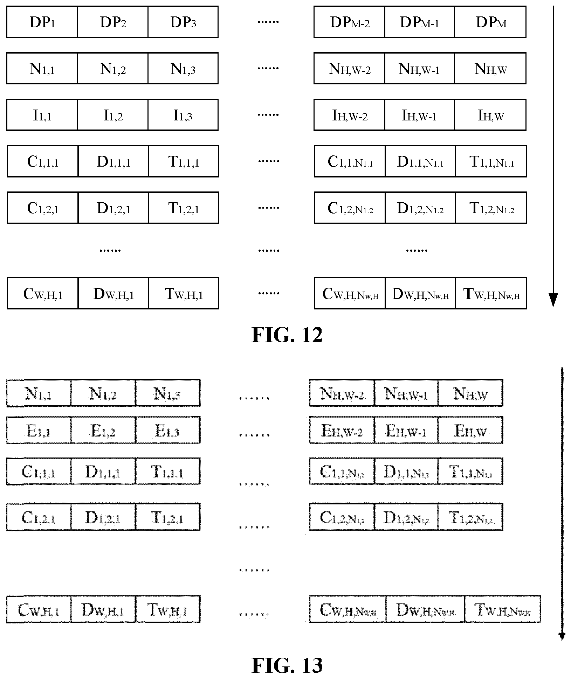

In the embodiment, it is assumed that the image resolution of the PMPI is W×H, the number of partitioned sMPIs is M, and the number of layers of each sMPI is S. Then the PCS data format of the PMPI is shown in FIG. 12, and frame data of a PMPI frame in the PMPI includes:
DPₘ: a starting depth of an M-th sMPI, M ∈ [1, M];
N_{i,j}: a number of active layers of the pixel (i, j), i ∈ [1, H], j ∈ [1, W];
I_{i,j}: an index of the sMPI where the pixel (i, j) is located;
C_{i,j,k}: color data, e.g., color value, at a k-th active layer of the pixel (i, j);
D_{i,j,k}: an index (D_{i,j,k} ∈ [1, S]) of the k-th active layer of the pixel (i, j); and
T_{i,j,k}: transparency data, e.g., a transparency value, at the k-th active layer of the pixel (i, j).

Compared with the previous embodiment, the starting depth of each sMPI in the PMPI frame is written into the frame data of the PMPI frame, and the index of the sMPI where the pixel (i, j) is located is also written into the frame data of the PMPI frame. Therefore, the embodiment may be applied to both gird partitioning of the 3D scene and non gird partitioning of the 3D scene.

In an exemplary embodiment of the disclosure, there is provided a third PCS data format suitable for the PMPI in the disclosure. Frame data of a PMPI frame in the PCS data includes the following parameters for each pixel in the PMPI:
a number of active layers of the pixel;
a starting depth of the sMPI where the pixel is located; and
color data and transparency data of the pixel at the each active layer, and a layer index of the active layer in the sMPI where the pixel is located.

In the embodiment, it is assumed that the image resolution of the PMPI is W×H, the number of sMPIs included in the PMPI is M, and the number of layers of each sMPI is S. Then the PCS data format of the PMPI is shown in FIG. 13, and frame data of a PMPI frame in the PMPI includes the following parameters:
N_{i,j}: a number of active layers of the pixel (i, j), i ∈ [1, H], j ∈ [1, W];
E_{i,j}: a starting depth of the sMPI where the pixel (i, j) is located;
C_{i,j,k}: color data, e.g., color value, at a k-th active layer of the pixel (i, j);
D_{i,j,k}: an index (D_{i,j,k} ∈ [1, S]) of the k-th active layer of the pixel (i, j); and
T_{i,j,k}: a transparency value at the k-th active layer of the pixel (i, j).

In the embodiment, data of the starting depth of each of the multiple sMPIs are represented as the starting depth of the sMPI where each pixel is located in the PMPI, that is, the starting depth of the sMPI where the pixel is located is directly written into the frame data of the PMPI frame, which facilitates the determination of the depth of the active layer of the pixel, but may affect the encoding efficiency.

The PCS data of the PMPI is used for determining the depth of the active layer of the pixel and the parameters of the color and transparency of the pixel at the active layer in the PMPI. Other data formats may be used in addition to the data formats provided by the above embodiments, which are not limited by the disclosure.

In the PCS data format suitable for the PMPI mentioned above, the information related to the starting depth of the sMPI is added to the PCS data, so that the decoder may calculate the depth of the active layer of the pixel based on the starting depth of the sMPI, thereby accurately restoring the image of the PMPI.

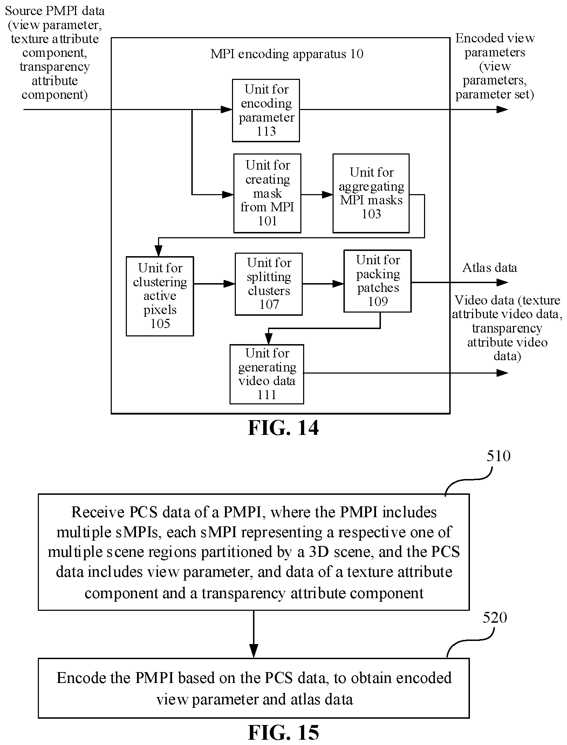

FIG. 14 is an architecture diagram of an MPI encoding apparatus that may be applied in the embodiment of the disclosure. Input data of the MPI encoding apparatus 10 is PCS data of a source MPI (e.g. PMPI), and the PCS data includes but not limited to view parameter (also referred to as image parameter, e.g. reference view camera parameter, etc.), data of a texture attribute component, data of a transparency attribute component, and etc.

As shown in FIG. 14, the MPI encoding apparatus 10 includes: a MPI mask creating unit 101 for creating mask from MPI, an unit 103 for aggregating MPI masks, a unit 105 for clustering active pixels, a unit 107 for splitting clusters, a unit 109 for packing patches, an unit 111 for generating video data, and an unit 113 for encoding parameter.

The unit 101 for creating mask from MPI is configured to generate an MPI masks based on input data. In an example, pixels (also referred to as sampling points) in MPI layers may be filtered according to a threshold of transparency, to obtain a mask of each layer. This is for distinguishing between the positions with high transparency (also referred to as pixels) and the positions with low transparency (also referred to as pixels) on each layer, and masking the positions with high transparency, to reduce the amount of data. The unit 101 for creating mask from MPI is configured to perform the above operation on all MPI frames within an intra-period. Assume that the size of the MPI frame is W×H×S, and the number of frames included in the intra-period is M, M masks with the size of W×H×S are obtained by the process of the unit 101 for creating mask from MPI.

The unit 103 for aggregating MPI masks is configured to get an union among the multiple masks on a same layer of the M masks with the size of W×H×S, to obtain a mask with the size of W×H×S.

The unit 105 for clustering active pixels is configured to cluster regions (active information regions) where the transparency is greater than a threshold in a mask of each layer into a series of clusters.

The unit 107 for splitting clusters is configured to split the clusters obtained by the unit 105 for clustering active pixels, to obtain clusters subjected to the splitting process.

The unit 109 for packing patches is configured to recombine a texture frame and a transparency frame corresponding to each patch (e.g. a rectangular region including clusters) into one frame, and encode the frame as atlas data for transmission.

The unit 111 for generating video data is configured to generate, based on the atlas data outputted by the unit 109 for packing patches, video data for transmission, and the video data includes texture attribute video data (raw), transparency attribute video data (raw), and etc.

The unit 113 for encoding parameter is configured to encode the source MPI data to obtain at least one encoded view parameter, and the encoded view parameter may include a view parameter list, a parameter set, and etc.

When the MPI is encoded by using the encoding apparatus architecture, firstly, the sampling points in the MPI are filtered according to the threshold of transparency to obtain a mask of each plane layer. Assuming that the size of the MPI is W×H×S and the number of frames included in the set intra-period is M, the above operation is performed on all MPI frames within the set intra-period, to obtain M masks with the size of W×H×S. Then, a union among masks on same layer is taken, to obtain the mask with the size of W×H×S. Next, the regions (active information regions) where the transparency is greater than the threshold in the mask of each layer is clustered and split into a series of clusters. The clusters are subjected to operations such as fusion and decomposition to obtain small patches. Then, the texture frame (i.e. color frame) and transparency frame corresponding to each patch are recombined into a frame, which is encoded as atlas data for transmission.

An embodiment of the disclosure provides a method for encoding a multiplane image (MPI), which may be used for encoding PMPI. As shown in FIG. 15, the encoding method includes the following operations 510 to 520.

At 510, packed compressed storage (PCS) data of a patch multiplane image (PMPI) is received, where the PMPI includes multiple sub multiplane images (sMPIs), each sMPI representing a respective one of multiple scene regions partitioned by a 3-dimension (3D) scene, and the PCS data includes at least one view parameter, and data of a texture attribute component and a transparency attribute component.

At 520, the PMPI is encoded based on the PCS data, to obtain at least one encoded view parameter and atlas data.

In the embodiment, the PCS data includes the starting depth information of the sMPI, which may be packed in the view parameter and/or data of a texture attribute component and a transparency attribute component. When encoding, the starting depth information of the sMPI is written into a bitstream, which may be packed in the encoded view parameter and/or atlas data.

In an exemplary embodiment of the disclosure, the PMPI is encoded based on the PCS data, including: each of multiple sMPIs included in the PMPI is encoded, where each sMPI may be encoded in the same encoding manner as that of the ordinary MPI (i.e., representing the whole 3D scene), and the encoding manner of the ordinary MPI may follow the requirements of related standards.

In an exemplary embodiment of the disclosure, the PCS data of the PMPI is converted from raw storage data of the PMPI according to the data processing method of any embodiment of the disclosure.

In an exemplary embodiment of the disclosure, the view parameter of the PCS data and the encoded view parameter include at least one of: part or all of frame parameters of a PMPI frame in the PCS data, or a starting depth of each of the multiple sMPIs in the PMPI frame; the data of the texture attribute component and the transparency attribute component in the PCS data includes part or all of frame data of the PMPI frame in the PCS data, and data of the texture attribute component includes color data; and the atlas data includes data and at least one parameter of a patch determined during encoding, the data includes color data and transparency data, and the at least one parameter includes at least one of identification information of a layer to which the data belongs, a starting depth of the layer to which the data belongs, identification information of an sMPI to which the data belongs, a starting depth of the sMPI to which the data belongs, or identification information of the PMPI to which the data belongs.

In the embodiment of the disclosure, the starting depth of the sMPI in the PMPI may be written into the encoded view parameter and/or atlas data.

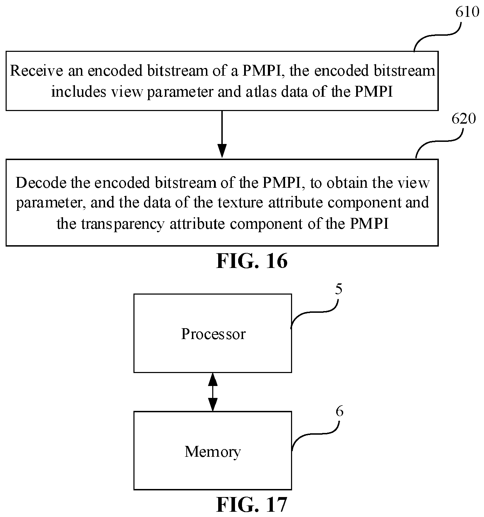

An embodiment of the disclosure provides a method for decoding a multiplane image (MPI), as shown in FIG. 16, including the following operations 610 to 620.

At 610, an encoded bitstream of a PMPI is received, where the encoded bitstream includes at least one view parameter and atlas data of the PMPI.

In the embodiment, the view parameter and/or the atlas data of the PMPI in the encoded bitstream include starting depth information of the sMPI.

At 620, the encoded bitstream is decoded, to obtain the view parameter, and data of a texture attribute component and a transparency attribute component of the PMPI.

Here the PMPI includes multiple sMPIs, each sMPI representing a respective one of a multiple scene regions partitioned by a 3-dimension (3D) scene.

In an exemplary embodiment of the disclosure, the view parameter of the PMPI includes at least one of:
a resolution of the PMPI frame;
a number of the multiple sMPIs in the PMPI frame;
a number of layers uniformly set for the multiple sMPIs in the PMPI frame;
a distribution rule of layers uniformly set for the multiple sMPIs in the PMPI frame;
an ending depth uniformly set for the multiple sMPIs in the PMPI frame;
values of M and N when partitioning the 3D scene by using a M×N grid; or
a starting depth of each of the multiple sMPIs in the PMPI frame.

In an exemplary embodiment of the disclosure, the atlas data includes data and at least one parameter of a patch determined during encoding, the data includes color data and transparency data, and the at least one parameter includes at least one of identification information of a layer to which the data belongs, a starting depth of the layer to which the data belongs, identification information of an sMPI to which the data belongs, a starting depth of the sMPI to which the data belongs, or identification information of a PMPI to which the data belongs.

An embodiment of the disclosure also provides a bitstream, where the bitstream is generated by encoding a patch multiplane image (PMPI), the bitstream includes at least one view parameter and atlas data of the PMPI, and the PMPI includes multiple sub multiplane images (sMPIs) for representing multiple scene regions partitioned by a 3-dimension (3D) scene. In the embodiment, the view parameter and/or the atlas data of the PMPI in the bitstream include starting depth information of the multiple sMPIs.

In an exemplary embodiment of the disclosure, the view parameter of the PMPI includes at least one of:
a resolution of a PMPI frame;
a number of the multiple sMPIs in the PMPI frame;
a number of layers uniformly set for the multiple sMPIs in the PMPI frame;
a distribution rule of layers uniformly set for the multiple sMPIs in the PMPI frame;
an ending depth uniformly set for the multiple sMPIs in the PMPI frame;
values of M and N when partitioning the 3D scene by using a M×N grid; or
a starting depth of each of the multiple sMPIs in the PMPI frame.

In an exemplary embodiment of the disclosure, the atlas data includes data and at least one parameter of a patch determined during encoding, the data includes color data and transparency data, and the at least one parameter includes at least one of identification information of a layer to which the data belongs, a starting depth of the layer to which the data belongs, identification information of an sMPI to which the data belongs, a starting depth of the sMPI to which the data belongs, or identification information of a PMPI to which the data belongs.

An embodiment of the disclosure further provides an apparatus for generating a multiplane image (MPI), as shown in FIG. 17, including a processor 5 and a memory 6 storing a computer program which may be execute on the processor 5, and the processor 5, when executing the computer program, implements the method for generating the MPI in any embodiment of the disclosure.

An embodiment of the disclosure further provides a data processing apparatus for a multiplane image (MPI), also referred to as FIG. 17, including a processor and a memory storing a computer program, and the processor, when executing the computer program, implements the data processing method for the MPI in any embodiment of the disclosure.

An embodiment of the disclosure further provides an apparatus for encoding a multiplane image (MPI), also referred to as FIG. 17, including a processor and a memory storing a computer program, and the processor, when executing the computer program, implements the method for encoding the MPI in any embodiment of the disclosure.

An embodiment of the disclosure further provides an apparatus for decoding a multiplane image (MPI), also referred to as FIG. 17, including a processor and a memory storing a computer program, and the processor, when executing the computer program, implements the method for decoding the MPI in any embodiment of the disclosure.

An embodiment of the disclosure further provides a non-transitory computer-readable storage medium, having stored thereon a computer program, and the computer program, when executed by a processor, implements the methods for generating, performing processing data on, encoding and decoding the MPI in any embodiment of the disclosure.

In one or more exemplary embodiments, the described functions may be implemented in hardware, software, firmware, or any combination thereof. If implemented in software, the function may be stored on or transmitted through a computer-readable medium as one or more instructions or codes, and be executed by a hardware-based processing unit. The computer-readable medium may include a computer-readable storage medium corresponding to a tangible medium, such as a data storage medium, or a communication medium including any medium that facilitates the transmission of a computer program from one place to another, such as in accordance with a communication protocol. In this way, the computer-readable medium may generally correspond to a non-transitory tangible computer-readable storage medium or a communication medium such as a signal or carrier. The data storage medium may be any available medium accessible by one or more computers or one or more processors to retrieve instructions, codes, and/or data structures for implementing the techniques described in the disclosure. A computer program product may include the computer-readable medium.

For example and without limitation, such computer-readable storage medium may include a random access memory (RAM), a read-only memory (ROM), an electrically erasable programmable ROM (EEPROM), a compact disk ROM (CD-ROM) or other optical disk storage apparatus, disk storage apparatus or other magnetic storage apparatus, flash memory, or any other medium that may be used to store desired program code in the form of instructions or data structures and that may be accessed by a computer. Furthermore, taking that any connection is referred to as a computer-readable medium as an example, if an instruction is transmitted from a website, a server, or other remote source using a coaxial cable, a fiber optic cable, a twisted pair, a digital subscriber line (DSL), or wireless techniques such as infrared, radio, and microwave are included in a definition of the medium. However, it should be understood that the computer-readable storage medium and the data storage medium do not include a connection, a carrier, a signal, or other transient (transitory) medium, but are intended for non-transitory tangible storage medium. As used herein, magnetic disks and optical disks include a CD, a laser disk, an optical disk, a digital versatile disk (DVD), a floppy disk or a Blu-ray disk, etc., where the magnetic disks generally reproduce data magnetically, while the optical disks reproduce data optically by using lasers. The above combination should also be included in the scope of the computer-readable medium.

The instructions may be executed by one or more processors, such as one or more digital signal processors (DSPs), general purpose microprocessors, application specific integrated circuits (ASICs), field programmable logic arrays (FPGAs), or other equivalent integrated or discrete logic circuits. Therefore, the term "processor" used herein may refer to any of the architectures above or any other architectures suitable for implementing the techniques described herein. Furthermore, in some aspects, the functionality described herein may be provided within a dedicated hardware and/or a software module configured for encoding and decoding, or incorporated into a combined codec. Furthermore, the techniques may be fully implemented in one or more circuits or logic elements.

The technical solution in the embodiments of the disclosure may be implemented in a wide variety of apparatuses or devices including a wireless handset, an integrated circuit (IC) or a set of ICs (e.g. a chipset). Various components, modules or units are described in the embodiments of the disclosure to emphasize function aspects of apparatuses configured to perform the described techniques, but it may not necessarily need to be implemented through different hardware units. Instead, as described above, various units may be combined in codec hardware units or provided by a collection of interoperable hardware units (including one or more processors as described above) in combination with suitable software and/or firmware.

## Claims

1. A method for generating a multiplane image (MPI), comprising:
partitioning a 3-dimension (3D) scene into a plurality of scene regions; and
generating a patch multiplane image (PMPI), wherein the PMPI comprises a plurality of sub multiplane images (sMPIs), each sMPI representing a respective one of the plurality of scene regions, and a starting depth of the sMPI being determined based on at least depth information of the scene region represented by the sMPI.

2. The method of claim 1, wherein determination of the starting depth of the sMPI based on at least the depth information of the scene region represented by the sMPI comprises:
determining the starting depth of the sMPI according to a minimum depth of a first region, wherein the first region is the scene region represented by the sMPI, or the first region is a region composed of the scene region represented by the sMPI and one or more neighbouring regions of the scene region represented by the sMPI.

3. The method of claim 2, wherein determining the starting depth of the sMPI according to the minimum depth of the first region comprises:
setting the starting depth of the sMPI to the minimum depth of the first region.

4. The method of claim 2 or 3, wherein the one or more neighbouring regions of the scene region represented by the sMPI comprises one or more scene regions around the scene region represented by the sMPI in the 3D scene.

5. The method of claim 1, wherein the sMPI comprises a plurality of layers sampled at different depths in the scene region represented by the sMPI, and each of the plurality of layers comprises a color frame and a transparency frame.

6. The method of claim 5, wherein generating the PMPI comprises:
determining the starting depths and ending depths of the plurality of sMPIs, wherein for each the plurality of sMPIs, the starting depth of the sMPI is determined based on at least the depth information of the scene region represented by the sMPI, and ending depths of the plurality of sMPIs are set to be same; and
for each of the plurality of sMPIs, determining a depth of each layer comprised in the sMPI according to the starting depth and the ending depth of the sMPI, a number of layers of the sMPI and a distribution rule of the layers, and sampling at the depth of the each layer of the scene region represented by the sMPI, to obtain the color frame and the transparency frame of the each layer comprised in the sMPI.

7. The method of claim 6, wherein the plurality of sMPIs correspond to the plurality of scene regions one to one, and the plurality of sMPIs are set to be same in terms of the number of layers and the distribution rule of the layers.

8. The method of claim 1, wherein partitioning the 3D scene into the plurality of scene regions comprises:
partitioning the 3D scene into the plurality of scene regions according to a preset scene partition rule, wherein at least one of the following information of the plurality of scene regions is determined according to the preset scene partition rule: a number of the plurality of scene regions, shapes of the plurality of scene regions, sizes of the plurality of scene regions, or positions of the plurality of scene regions;
wherein the sizes of the plurality of scene regions are same or different, the shapes of the plurality of scene regions are at least one of regular shape or irregular shape, and the regular shape comprises at least one of: triangle, rectangle, pentagon, or hexagon.

9. The method of claim 1 or 8, wherein partitioning the 3D scene into the plurality of scene regions according to the preset scene partition rule comprises:
partitioning the 3D scene into M×N scene regions by using an M×N grid, wherein M and N are positive integers, and M×N ≥ 2.

10. The method of claim 1, wherein raw storage data of the PMPI comprises a frame parameter and frame data of a PMPI frame, and the frame parameter of the PMPI frame in the raw storage data comprises at least one of:
a resolution of the PMPI frame;
a number of the plurality of sMPIs in the PMPI frame;
a number of layers uniformly set for the plurality of sMPIs in the PMPI frame;
a distribution rule of layers uniformly set for the plurality of sMPIs in the PMPI frame;
an ending depth uniformly set for the plurality of sMPIs in the PMPI frame; or
values of M and N when partitioning the 3D scene by using a M×N grid;
wherein frame data of each PMPI frame in the raw storage data comprises data of a color frame and a transparency frame of each layer in each of the plurality of sMPIs comprised in the each PMPI frame.

11. A data processing method for a multiplane image (MPI), comprising:
obtaining raw storage data of a patch multiplane image (PMPI), wherein the PMPI comprises a plurality of sub multiplane images (sMPIs), each sMPI representing a respective one of a plurality of scene regions partitioned by a 3-dimension (3D) scene; and
converting the raw storage data of the PMPI into packed compressed storage (PCS) data, wherein the PCS data is configured to determine, for each pixel in the PMPI, a depth of each of at least one active layer of the pixel and color and transparency of the pixel at the active layer in the PMPI.

12. The method of claim 11, wherein the PMPI is generated by using the method of any one of claims 1 to 10.

13. The method of claim 11, wherein the PCS data comprises frame data of one or more PMPI frames, and the frame data of one of the PMPI frames in the PCS data comprises:
a starting depth of each of the plurality of sMPIs in the PMPI frame; and the following data of each pixel in the PMPI frame: color data and transparency data of the pixel at each active layer, and a layer index of the each active layer in an sMPI where the pixel is located; or
the starting depth of each of the plurality of sMPIs in the PMPI frame; and the following data of each pixel in the PMPI frame: an index of the sMPI where the pixel is located, the color data and the transparency data of the pixel at the each active layer, and the layer index of the each active layer in the sMPI where the pixel is located; or
the following data of each pixel in the PMPI frame: a starting depth of the sMPI where the pixel is located, the color data and the transparency data of the pixel at the each active layer, and the layer index of the each active layer in the sMPI where the pixel is located.

14. The method of claim 13, wherein the frame data of one of the PMPI frames in the PCS data further comprises a number of active layers of each pixel in the PMPI frame.

15. The method of claim 11, 12 or 13, wherein the PCS data further comprises a frame parameter of the PMPI frame, and the frame parameter of the PMPI frame in the PCS data comprises at least one of:
a resolution of the PMPI frame;
a number of the plurality of sMPIs in the PMPI frame;
a number of layers uniformly set for the plurality of sMPIs in the PMPI frame;
a distribution rule of layers uniformly set for the plurality of sMPIs in the PMPI frame;
an ending depth uniformly set for the plurality of sMPIs in the PMPI frame; or
values of M and N when partitioning the 3D scene by using a M×N grid.

16. A method for encoding a multiplane image (MPI), comprising:
receiving packed compressed storage (PCS) data of a patch multiplane image (PMPI), wherein the PMPI comprises a plurality of sub multiplane images (sMPIs), each sMPI representing a respective one of a plurality of scene regions partitioned by a 3-dimension (3D) scene, and the PCS data comprises at least one view parameter, and data of a texture attribute component and a transparency attribute component; and
encoding the PMPI based on the PCS data, to obtain at least one encoded view parameter and atlas data.

17. The method of claim 16, wherein encoding the PMPI based on the PCS data comprises:
encoding each of the plurality of sMPIs comprised in the PMPI separately.

18. The method of claim 16 or 17, wherein the PCS data of the PMPI is converted from raw storage data of the PMPI according to the method of any one of claims 11 to 15.

19. The method of claim 18, wherein the view parameter of the PCS data and the encoded view parameter comprises at least one of: part or all of frame parameters of a PMPI frame in the PCS data, or a starting depth of each of the plurality of sMPIs in the PMPI frame;
the data of the texture attribute component and the transparency attribute component in the PCS data comprises part or all of frame data of the PMPI frame in the PCS data, and data of the texture attribute component comprises color data; and
the atlas data comprises data and at least one parameter of a patch determined during encoding, the data comprises color data and transparency data, and the at least one parameter comprises at least one of: identification information of a layer to which the data belongs, a starting depth of the layer to which the data belongs, identification information of an sMPI to which the data belongs, a starting depth of the sMPI to which the data belongs, or identification information of a PMPI to which the data belongs.

20. A method for decoding a multiplane image (MPI), comprising:
decoding an encoded bitstream of a patch multiplane image (PMPI), to obtain at least one view parameter, and data of a texture attribute component and a transparency attribute component of the PMPI;
wherein the PMPI comprises a plurality of sub multiplane images (sMPIs), each sMPI representing a respective one of a plurality of scene regions partitioned by a 3-dimension (3D) scene, and the encoded bitstream comprises the view parameter and atlas data of the PMPI.

21. The method of claim 20, wherein the view parameter of the PMPI comprises at least one of:
a resolution of the PMPI frame;
a number of the plurality of sMPIs in the PMPI frame;
a number of layers uniformly set for the plurality of sMPIs in the PMPI frame;
a distribution rule of layers uniformly set for the plurality of sMPIs in the PMPI frame;
an ending depth uniformly set for the plurality of sMPIs in the PMPI frame;
values of M and N when partitioning the 3D scene by using a M×N grid; or
a starting depth of each of the plurality of sMPIs in the PMPI frame.

22. The method of claim 20 or 21, wherein the atlas data comprises data and at least one parameter of a patch determined during encoding, the data comprises color data and transparency data, and the at least one parameter comprises at least one of identification information of a layer to which the data belongs, a starting depth of the layer to which the data belongs, identification information of an sMPI to which the data belongs, a starting depth of the sMPI to which the data belongs, or identification information of a PMPI to which the data belongs.

23. A bitstream, wherein the bitstream is generated by encoding a patch multiplane image (PMPI), the bitstream comprises at least one view parameter and atlas data of the PMPI, and the PMPI comprises a plurality of sub multiplane images (sMPIs), each sMPI representing a respective one of a plurality of scene regions partitioned by a 3-dimension (3D) scene.

24. The bitstream of claim 23, wherein the view parameter of the PMPI comprises at least one of:
a resolution of a PMPI frame;
a number of the plurality of sMPIs in the PMPI frame;
a number of layers uniformly set for the plurality of sMPIs in the PMPI frame;
a distribution rule of layers uniformly set for the plurality of sMPIs in the PMPI frame;
an ending depth uniformly set for the plurality of sMPIs in the PMPI frame;
values of M and N when partitioning the 3D scene by using a M×N grid; or
a starting depth of each of the plurality of sMPIs in the PMPI frame.

25. The bitstream of claim 23 or 24, wherein the atlas data comprises data and at least one parameter of a patch determined during encoding, the data comprises color data and transparency data, and the at least one parameter comprises at least one of: identification information of a layer to which the data belongs, a starting depth of the layer to which the data belongs, identification information of an sMPI to which the data belongs, a starting depth of the sMPI to which the data belongs, or identification information of a PMPI to which the data belongs.

26. An apparatus for generating a multiplane image (MPI), comprising a processor and a memory storing a computer program, and the processor, when executing the computer program, implements the method for generating the MPI of any one of claims 1 to 10.

27. A data processing apparatus for a multiplane image (MPI), comprising a processor and a memory storing a computer program, and the processor, when executing the computer program, implements the data processing method for the MPI of any one of claims 11 to 15.

28. An apparatus for encoding a multiplane image (MPI), comprising a processor and a memory storing a computer program, and the processor, when executing the computer program, implements the method for encoding the MPI of any one of claims 16 to 19.

29. An apparatus for decoding a multiplane image (MPI), comprising a processor and a memory storing a computer program, and the processor, when executing the computer program, implements the method for decoding the MPI of any one of claims 20 to 22.

30. A non-transitory computer-readable storage medium, having stored thereon a computer program, and the computer program, when executed by a processor, implements the method of any one of claims 1 to 22.
